# EUROPEAN PATENT SPECIFICATION

(11) **EP 2 437 568 B1**
(45) Date of publication and mention of the grant of the patent: **23.05.2018**
(21) Application number: 10780569.9
(22) Date of filing: 26.05.2010
(51) Int. Cl.: H04W 80/06, H04W 80/04, H04W 88/06, H04L 29/12

(54) **WIRELESS LAN ACCESS POINT APPARATUS, MOBILE COMMUNICATION TERMINAL, COMMUNICATION METHOD, AND PROGRAM**
ZUGANGSVORRICHTUNG FÜR EIN WLAN, MOBILES KOMMUNIKATIONSENDGERÄT, KOMMUNIKATIONSVERFAHREN UND PROGRAMM
APPAREIL DE POINT D'ACCÈS DE RÉSEAU LOCAL SANS FIL, TERMINAL DE COMMUNICATION MOBILE, PROCÉDÉ DE COMMUNICATION ET PROGRAMME

(30) Priority: 27.05.2009 JP 2009128035
(43) Date of publication of application: 04.04.2012
(73) Proprietor: NEC Corporation, Tokyo 108-8001 (JP)
(72) Inventor: SEO, Takahiro, Tokyo 108-8001 (JP)
(74) Representative: Glawe, Delfs, Moll
(86) International application number: PCT/JP2010/058895
(87) International publication number: WO 2010/137614

(56) References cited:
- WO-A1-2004/068742
- WO-A1-2010/017293
- WO-A2-2007/136621
- JP-A- 11 122 301
- MONTENEGRO SUN MICROSYSTEMS G ET AL: "Long Thin Networks; rfc2757.txt", NETWORK WORKING GROUP RFC 1717, INTERNET SOCIETY (ISOC) 4, RUE DES FALAISES CH- 1205 GENEVA, SWITZERLAND, CH, 1 January 2000 (2000-01-01), XP015008540, ISSN: 0000-0003
- MALTZ D A ET AL: "MSOCKS: an architecture for transport layer mobility", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, vol. 3, 29 March 1998 (1998-03-29), pages 1037-1045, XP010270326, DOI: 10.1109/INFCOM.1998.662913 ISBN: 978-0-7803-4383-2

## Description

### TECHNICAL FIELD

### (DESCRIPTION OF RELATED APPLICATION)

The present invention is based upon and claims the benefit of the priority of Japanese Patent Application No. 2009-128035 (filed on May 27, 2009).

The present invention relates to a wireless LAN (Local Area Network) access point device, a mobile communication terminal, a communication method, and a program.

### BACKGROUND

Patent Document 1 discloses cellular phones each including a wireless LAN access point function. Patent Document 2 discloses a cellular phone that functions as a wireless LAN access point in a state where the cellular phone is placed on a cradle. When these devices capable of operating as wireless LAN master devices are employed, it is possible to make connection to the Internet even at a location at which there is no wired Internet environment but which can be connected to a mobile communication network.

[Patent Document 1] JP Patent Kokai Publication No. JP2006-270889A
[Patent Document 2] JP Patent Kokai Publication No. JP2006-33368A

### SUMMARY

Generally, it is premised that a device including a wireless LAN connection function uses a public wireless LAN access point or a wireless LAN router at home. It is not supposed that such a device performs communication via a mobile communication network. The device does not have specifications for using setting tuned for wireless communication such as W-TCP (Wireless Profiled Transport Control Protocol) or a transport layer protocol.

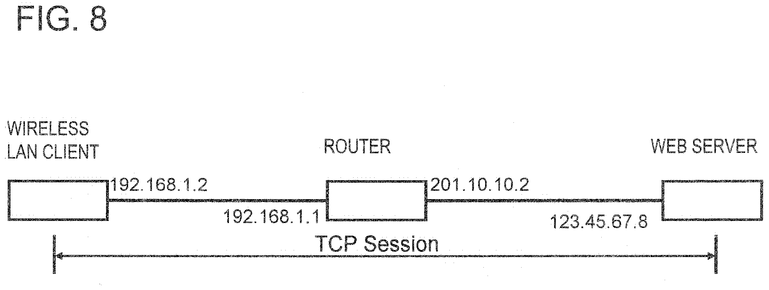

For this reason, a device described in each of the above-mentioned Patent Documents that uses the wireless LAN access point establishes a TCP (Transport Control Protocol) connection with a desired Web server or the like across a wireless LAN network and a mobile communication network (refer to Fig. 8). Thus, there is a problem that a retransmission request resulting from a delay or a packet loss inherent to wireless communication frequently occurs, and the throughput of the wireless LAN access point is reduced.

MONTENEGRO SUN MICROSYSTEMS G ET AL: "Long Thin Networks; rfc2757.txt", NETWORK WORKING GROUP RFC 1717, INTERNET SOCIETY (ISOC) 4, RUE DES FALAISES CH- 1205 GENEVA, SWITZERLAND, CH, 1 January 2000 (2000-01-01), discloses that in order to connect a client to the server two TCP connections interconnected at the access point are established, and MALTZ D A ET AL: "MSOCKS: an architecture for transport layer mobility", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA, IEEE, US, vol. 3, 29 March 1998 (1998-03-29), pages 1037 - 1045, DOI: 10.1109/INFCOM.1998.662913 discloses a setup signalling.
The cradle described in Patent Document 2 to which the cellular phone is connected, for example, relays data on a data link layer using a bridge processing function. As indicated by a protocol stack in Fig. 7 in Patent Document 2, the personal computer and the Web server directly establish the TCP connection. It is anticipated that not only when the cellular phone is used being placed on the cradle, but also when the wireless LAN function is used during movement or outside home, the throughput of the wireless LAN access point is further reduced.

The present invention has been made in view of the above-mentioned situation. It is therefore an object of the present invention to improve throughput performance of a wireless LAN access point device that provides a service via a mobile communication network.

This object is achieved by a wireless LAN access point device according to claim 1 and a mobile communication terminal according to claim 6, a communication method according to claim 7 and a program for computer according to claim 8; the remaining claims are related to further developments of the invention.

### BRIEF DESCRIPTION OF THE DRAWINGS

Fig. 1 is a diagram for explaining an overview of the present invention;
Fig. 2 is a diagram for explaining a schematic configuration of a first exemplary embodiment of the present invention;
Fig. 3 is a block diagram showing a configuration of a mobile communication terminal in the first exemplary embodiment of the present invention;
Fig. 4 is a diagram showing a protocol stack when a wireless LAN client shown in Fig. 2 is accessing a contents server;
Fig. 5 is a sequence diagram showing operations until when the wireless LAN client in Fig. 2 becomes subordinate to the mobile communication terminal that operates as an access point;
Fig. 6 is a sequence diagram when the wireless LAN client in Fig. 2 has made an access request to the contents server;
Fig. 7 is a table for explaining another exemplary embodiment of the present invention; and
Fig. 8 is a diagram for explaining a TCP connection between a wireless LAN client and a contents server.

### PREFERRED MODES

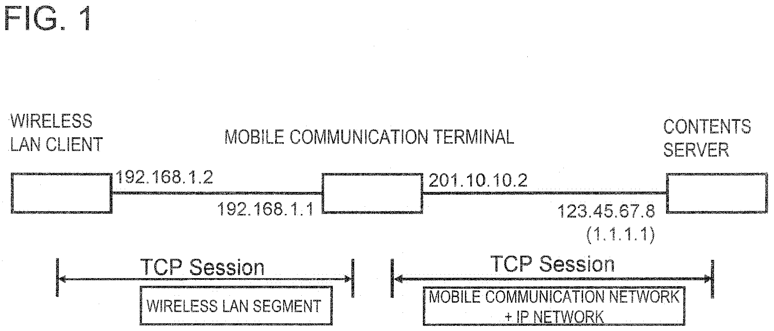

First, an overview of the present invention will be described. As shown in Fig. 1, when a wireless LAN access point device (wireless LAN base station) according to the present invention receives a request for establishing a TCP connection to a contents server from a wireless LAN client(s) belonging (i.e. being subordinate)s to the wireless LAN access point device, the wireless LAN access point device temporarily terminates the request for establishing the TCP connection requested from the wireless LAN client(s) at the wireless LAN access point device, and the wireless LAN access point device separately establishes a TCP connection between the own device (i.e. wireless LAN access point device) and the contents server, thereby starting a session.

With the above-mentioned arrangement, a segment in a transport layer in which a retransmission request may occur can be divided into a segment, so that transmission/reception control can be performed in each segment. Further, by using W-TCP optimized for wireless communication as TCP parameters between the own device (wireless LAN access point device) and the contents server, the throughput of the wireless LAN access point device in a segment for a mobile communication network and an IP (Internet Protocol) network in Fig. 1 is improved.

### [First Exemplary Embodiment]

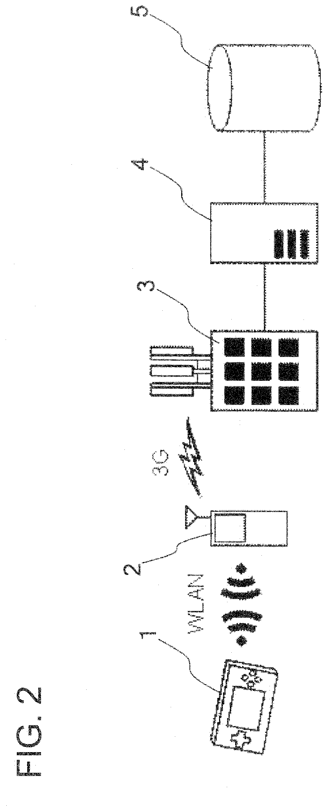

Next, a first exemplary embodiment of the present invention will be described in detail with reference to drawings. Fig. 2 is a diagram for explaining a schematic configuration of the first exemplary embodiment of the present invention. Referring to Fig. 2, there are shown a wireless LAN client 1, a mobile communication terminal 2, a base station 3 on a mobile communication network, a gateway server 4 on the mobile communication network, and a contents server 5 placed on an IP network.

The wireless LAN client 1 is subordinate (i.e. in an accessing state) to a wireless LAN access point, and is an apparatus such as personal computer, game apparatus, camera, or PDA (Personal Digital Assistant) that includes a function of transmitting or receiving data to or from an arbitrary server or the like on a network.

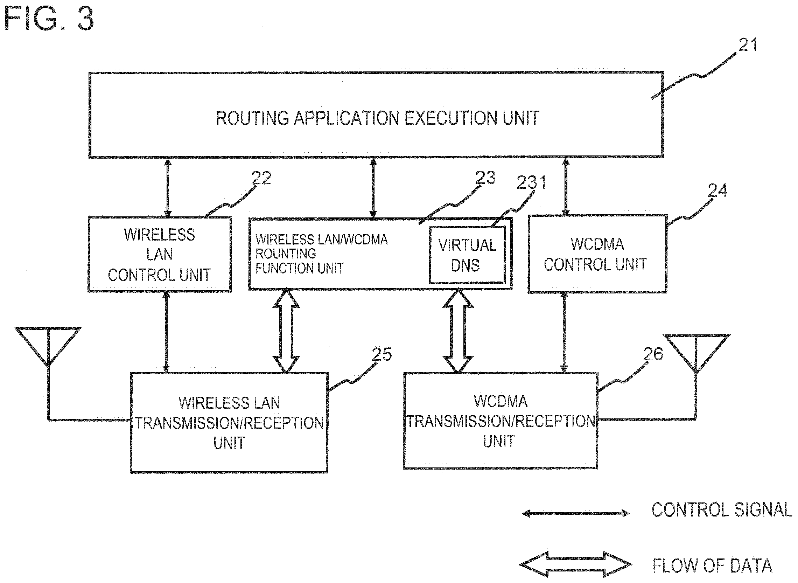

The mobile communication terminal 2 is a cellular phone terminal including a wireless LAN access point function or an access point device or the like configured so that the access point device can be used at an arbitrary location such as outside the home, using the mobile communication network. A detailed configuration of the mobile communication terminal 2 will be described later in detail, using Fig. 3.

The mobile communication terminal 2 can be connected to the IP network through the base station 3 and the gateway server 4 on the mobile communication network.

The contents server 5 is a server for holding contents for the specific wireless LAN client 1, for example.

Fig. 3 is a block diagram showing a configuration of the mobile communication terminal according to the first exemplary embodiment of the present invention. Referring to Fig. 3, there is shown the configuration including a routing application execution unit 21, a wireless LAN control unit 22, a wireless LAN/WCDMA routing function unit 23, a WCDMA (Wideband Code Division Multiple Access) control unit 24, a wireless LAN transmission/reception unit 25, and a WCDMA transmission/reception unit 26.

The routing application execution unit 21 controls respective units of the mobile communication terminal 2, thereby causing the mobile communication terminal 2 to function as the wireless LAN access point. This can be implemented by causing a CPU (Central Processing Unit) mounted on the mobile communication terminal 2 to execute a program for executing a process that will be described later, for example.

According to an instruction from the routing application execution unit 21, the wireless LAN control unit 22 controls the wireless LAN transmission/reception unit 25 compliant with a standard such as IEEE 802.11b/g to execute a subordination process for the wireless LAN client 1 and data transmission/reception including retransmission control.

According to an instruction from the routing application execution unit 21, the WCDMA control unit 24 controls the WCDMA transmission/reception unit 26 connected to the mobile communication network to execute data transmission/reception including retransmission control,.

The wireless LAN/WCDMA routing function unit 23 includes a private DNS (Domain Name Server) unit 231 that selects and supplies a virtual IP address (private IP address) for the wireless LAN client(s) 1 from among wireless LAN slave unit virtual IP addresses set in advance, for a name resolution request from the wireless LAN client 1, and associates and stores a domain requested from the wireless LAN client 1 and the supplied virtual IP address.

When the wireless LAN/WCDMA routing function unit 23 receives from the wireless LAN client 1 a request for establishing a TCP connection (SYN) using the virtual IP address as a destination, the wireless LAN/WCDMA routing function unit 23 establishes a TCP connection using a real IP address corresponding to the drain requested from the wireless LAN client 1 as a destination, in place of the wireless LAN client 1. When the TCP connection using the real IP address as the destination, requested from the wireless LAN client 1 is established, the wireless LAN/WCDMA routing function unit 23 sends to the wireless LAN client 1 a response for establishing the TCP connection for the virtual IP address that has been selected and supplied (The virtual IP address is used for source IP address in the response for establishing the TCP connection.).

When the wireless LAN/WCDMA routing function unit 23 establishes the TCP connection with the connection request destination in place of the wireless LAN client 1, the wireless LAN/WCDMA routing function unit 23 can be made to optimize TCP parameters and perform protocol conversion.

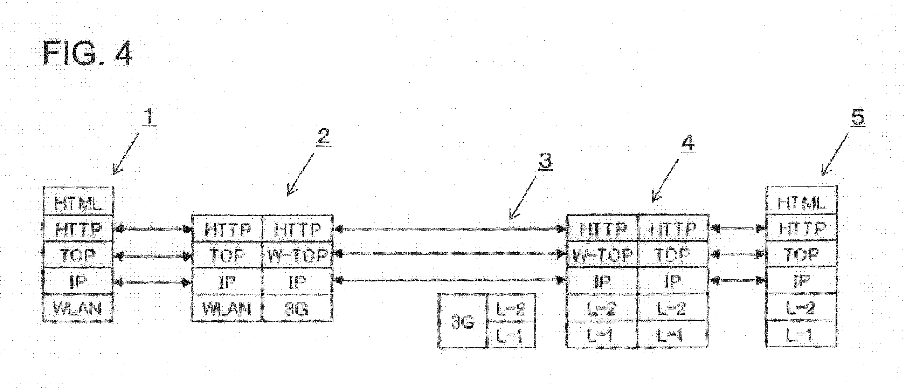

Fig. 4 is a diagram showing a protocol stack when the wireless LAN client 1 in Fig. 2 is accessing the contents server 5. In the example in Fig. 4, communication is performed between the wireless LAN client 1 and the mobile communication terminal 2 in Fig. 4 using TCP, and communication is performed between the mobile communication terminal 2 and the gateway server 4 in Fig. 4 using W-TCP, by the wireless LAN/WCDMA routing function unit 23.

Next, operations of this exemplary embodiment will be described in detail with reference to drawings. First, operations until when the wireless LAN client 1 becomes subordinate to the mobile communication terminal 2 that operates as the access point.

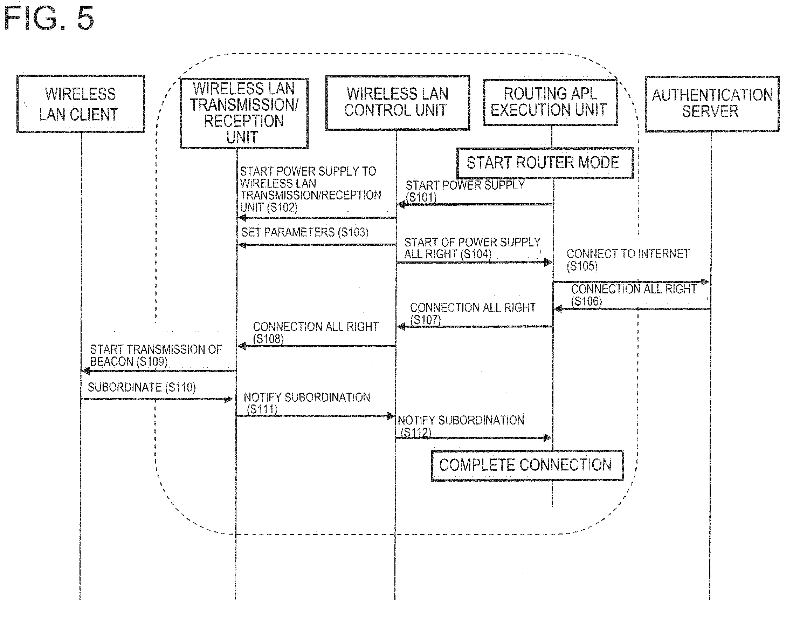

Fig. 5 is a sequence diagram showing the operations until when the wireless LAN client 1 becomes subordinate to the mobile communication terminal 2. Referring to Fig. 5, when a user of the mobile communication terminal 2 starts the routing application execution unit 21 (router mode) through a function selection screen or the like of the mobile communication terminal, the routing application execution unit 21 instructs the wireless LAN control unit 22 to start power supply (in step S101).

The wireless LAN control unit 22 which has received the instruction starts the power supply to the wireless LAN transmission/reception unit 25 (in step S102), and also sets various wireless LAN parameters (in step S103).

The wireless LAN control unit 22 which has completed the power supply to the wireless LAN transmission/reception unit 25 and setting of the parameters responds that the start of the power supply has been completed (start of the power supply has been all right) to the routing application execution unit 21 (in step S104).

The routing application execution unit 21 that has received the response accesses an authentication server, thereby executing an Internet connection process (in step S105). When Internet connection is completed (in step S106), the routing application execution unit 21 causes the wireless LAN transmission/reception unit 25 to start transmission of a beacon through the wireless LAN control unit 22 (in steps S107 to S109).

When the wireless LAN client 1 receives the beacon and the subordination process is executed (in step S110), notification of subordination is supplied to the routing application execution unit 21 through the wireless LAN transmission/reception unit 25 and the wireless LAN control unit 22, thereby completing connection.

Next, a description will be directed to operations when the wireless LAN client 1 that completed the subordination process has accessed the contents server 5.

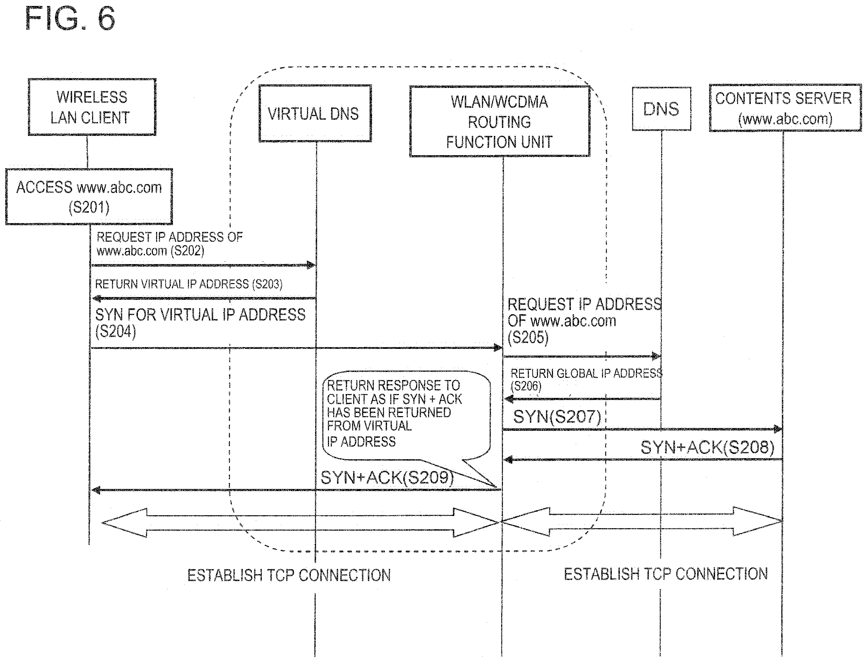

Fig. 6 is a sequence diagram showing the operations until when a TCP connection is established between the wireless LAN client 1 and the contents server 5. In the following description, it is assumed that a domain name of www.abc.com is given to the contents server 5. Then, the user of the wireless LAN client 1 tries to receive contents from www.abc.com.

Referring to Fig. 6, when a request for accessing www.abc.com is first sent from the wireless LAN client 1 (in step S201), the private DNS unit 231 of the mobile communication terminal 2 returns a virtual IP address for the wireless LAN slave unit (in step S203) for a name resolution request for www.abc.com (in step S202). It is assumed that 1.1.1.1 has been responded as the virtual IP address.

The wireless LAN client 1 sends a request for establishing a TC connection (SYN) using the virtual IP address (1. 1. 1. 1) as a destination (in step S204). The wireless LAN/WCDMA routing function unit 23 of the mobile communication terminal 2 that has received the TCP connection establishment request (SYN) inquires the private DNS unit 231 about the domain name based on which the virtual IP address (1.1.1.1) has been issued (selected and supplied), thereby determining that the request for accessing www.abc.com has been made.

The wireless LAN/WCDMA routing function unit 23 of the mobile communication terminal 2 obtains the global IP address of www.abc.com for which the virtual IP address (1.1.1.1) has been selected and supplied (in steps S205 and S206) from a DNS on the Internet, and then sends a request for establishing a TCP connection (SYN) using the global IP address as a destination (in step S207).

When the wireless LAN/WCDMA routing function unit 23 of the mobile communication terminal 2 receives a response (SYN + ACK) of acknowledging establishment of the TCP connection from the contents server 5 that has received the TCP connection establishment request (SYN) (in step S208), the wireless LAN/WCDMA routing function unit 23 of the mobile communication terminal 2 returns the response of acknowledging TCP connection establishment for the virtual IP address (1.1.1.1) to the wireless LAN client 1 (in step S209). Namely, the virtual IP address (1.1.1.1) is used for source IP address in the response of acknowledging the TCP connection.

With the above arrangement, TCP sessions are respectively established between the wireless LAN client 1 and the mobile communication terminal 2 and between the mobile communication terminal 2 and the contents server 5 (to be exact, the gateway server 4).

Thereafter, similarly, when the wireless LAN client 1 transmits a packet to the virtual IP address (1.1.1.1), the mobile communication terminal 2 transmits the packet to the contents server 5. Then when the mobile communication terminal 2 receives any response or the like from the contents server 5, the mobile communication terminal 2 returns the response for the virtual IP address (1.1.1.1) to the wireless LAN client 1. Namely, the virtual IP address (1.1.1.1) is used for source IP address in these response to the wireless LAN client 1.

Accordingly, as seen from the wireless LAN client 1, it becomes possible for the wireless LAN client 1 to perform data transmission/reception with the contents server 5 as if the TCP connection is directly established between the wireless LAN client 1 and the contents server 5.

As described above, this exemplary embodiment is configured so that, when the wireless LAN client 1 performs communication with the contents server 5, the TCP connection is terminated at the cellular telephone terminal 2, and communication is separately performed with the gateway server 4 by the W-TCP optimized for the mobile communication network. Thus, the effective throughput can be improved.

Further, in this exemplary embodiment, the cellular telephone terminal 2 is configured to include the private DNS unit 231 to perform conversion between the virtual IP address and the real address (global IP address). Thus, it becomes possible to provide an environment in which a plurality of wireless LAN clients are simultaneously connected.

Though the above description was given about the exemplary embodiment of the present invention, the present invention is not limited to the above-mentioned exemplary embodiment. Further variation, substitution, and adjustment can be added within the scope not departing from the basic technical concept of the present invention. The description was given, assuming that the WCDMA control unit 24 and the WCDMA transmission/reception unit 26 are included, for example. The present invention can be similarly applied to other wireless communication systems as well.

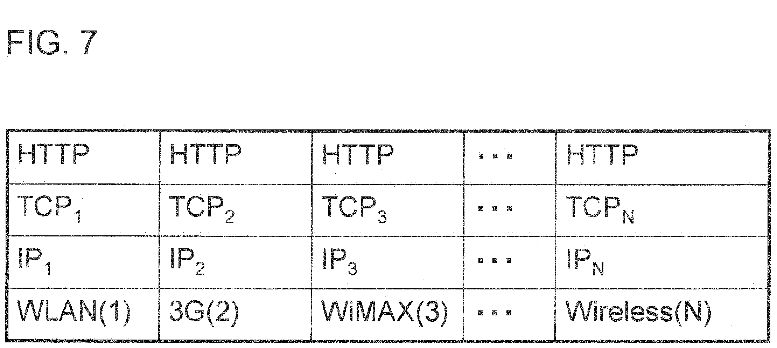

In the above-mentioned exemplary embodiment, the description was given, assuming that the mobile communication terminal 2 includes the wireless LAN transmission/reception unit 25 and the WCDMA transmission/reception unit 26. However, assume that N kinds of communication modules such as a communication module for WiMaX (compliant with IEEE802. 16e) is provided at the mobile communication terminal 2, as shown in Fig. 7, for example. Then, also when these communication modules are used, similarly, a TCP connection is temporarily terminated, and a TCP connection can be separately established with an access destination. With this arrangement, a change in parameters of a transport layer protocol such as the TCP can be performed, or the transport layer protocol can be converted, according to each communication module or each wireless segment. The communication throughput can be thereby improved.

When the mobile communication terminal is a portable terminal including a function of acquiring position information by GPS (Global Positioning System) or position information on an in-zone cell, not only an access point function can be provided to the wireless LAN client, but also the position information can be provided to the wireless LAN client and the connection destination server of the portable terminal. To take an example, when a digital camera including a wireless LAN function uploads image data, position information can be added to the image data. Further, to take an example, the mobile communication terminal can function as an access point to cause a game apparatus including the wireless LAN function to participate in an on-line match-up, and information on the position of the wireless LAN client can also be provided as user information on the game. Further, position information can also be provided to a server that provides to the wireless LAN client map information around the wireless LAN client and/or a navigation function.

## Claims

1. A wireless LAN access point device, wherein
when the wireless LAN access point device (2) is adapted to receive from a wireless LAN, Local Area Networks, Area Network) client(s) (1) being subordinate to the wireless LAN access point device a request for connection to a predetermined server (5), the wireless LAN access point device (2) is adapted to respectively establish separate communication connections with a side of the wireless LAN client(s) (1) and with a side of the predetermined server (5), and to perform transmission/reception control over data to be transmitted to and received from the wireless LAN client(s) and the predetermined server, **characterized in that** the wireless LAN access point device comprises:
a private DNS (Domain Name Server) unit that is adapted to select from plural preset virtual IP addresses a virtual IP (Internet Protocol) address for a domain name requested from the wireless LAN client; to store the selected address in association with the domain name and to issue the selected address to the wireless LAN client,
the wireless LAN access point device is adapted to perform packet routing for the wireless LAN client, using the virtual IP address, and to determine based on the virtual IP address to which domain name a connection has to be established.

2. The wireless LAN access point device according to claim 1, wherein
the wireless LAN access point device is adapted to obtain a global IP address corresponding to the domain name associated with the virtual IP, thereby providing to a plurality of wireless LAN clients an environment in which the wireless LAN clients are simultaneously connected to an identical global IP address.

3. The wireless LAN access point device according to claim 1 or 2, wherein
the wireless LAN access point device (2) is adapted to perform a change in parameters of a transport layer protocol or converts the transport layer protocol, according to a communication system of the predetermined server.

4. The wireless LAN access point device according to any one of claims 1 to 3, wherein
the transport layer protocol used for communication with the predetermined server is W-TCP (Wireless Profiled Transmission Control Protocol).

5. The wireless LAN access point device according to any one of claims 1 to 4, wherein the wireless LAN access point device further comprises:
a position information acquisition unit that is adapted to acquire position information on the wireless LAN access point device; and
the wireless LAN access point device is adapted to provide the position information acquired by the position information acquisition unit to the predetermined server or the wireless LAN client(s) being subordinate to the wireless LAN access point device.

6. A mobile communication terminal, wherein
the mobile communication terminal includes a function of a wireless LAN (Local Area Network) access point device according to one of claims 1 to 5.

7. A communication method comprising the steps of:
respectively establishing separate communication connections with a side of a wireless LAN client(s) being subordinate to the mobile communication terminal and with a side of a predetermined server when the mobile communication terminal receives from the wireless LAN client(s) a request for connection to the predetermined server, the mobile communication terminal including a wireless LAN (Local Area Network) access point function to operate as a wireless LAN access point; and
performing transmission/reception control over data to be transmitted to and received from the wireless LAN client(s) and the predetermined server selecting from a plurality of preset virtual IP addresses a virtual IP address for a domain name requested from the wireless LAN client, storing the selected virtual IP address in association with the domain name and issuing the selected address to the wireless LAN client, performing packet routing for the wireless LAN client using the virtual IP address, and determining based on the virtual IP address to which domain name a connection has to be established.

8. A program for a computer mounted on a mobile communication terminal that includes a wireless LAN (Local Area Network) access point function to operate as a wireless LAN access point, the program causing the computer to execute the process steps of the method of claim 7.

## Patentansprüche

1. Drahtlose LAN-Zugriffspunktvorrichtung, wobei,
wenn die drahtlose LAN-Zugriffspunktvorrichtung (2) ausgebildet ist, um von einem oder mehreren drahtlosen LAN-, Lokalbereichsnetzwerke, Klienten (1), der der drahtlosen LAN-Zugriffspunktvorrichtung untergeordnet ist, eine Anforderung für eine Verbindung zu einem vorgegebenen Server (5) zu erhalten, die drahtlose LAN-Zugriffspunktvorrichtung (2) ausgebildet ist, um jeweils separate Kommunikationsverbindungen mit einer Seite des oder der drahtlosen LAN-Klienten (1) und mit einer Seite des vorgegebenen Servers (5) zu errichten und eine Übertragungs-/Empfangssteuerung über Daten durchzuführen, die an den oder die drahtlosen LAN-Klienten und den vorgegebenen Server zu übertragen und davon zu empfangen sind, **dadurch gekennzeichnet, dass** die drahtlose LAN-Zugriffspunktvorrichtung aufweist:
eine private DNS(Domainnamenserver)-Einheit, die ausgebildet ist, um aus einer Anzahl voreingestellter virtueller IP-Adressen eine virtuelle IP(Internet Protokoll)-Adresse für einen Domainnamen auszuwählen, der von dem drahtlosen LAN-Klienten angefordert wird, die ausgewählte Adresse in Zuordnung zu dem Domainnamen zu speichern und die ausgewählte Adresse an den drahtlosen LAN-Klienten auszugeben,
wobei die drahtlose LAN-Zugriffspunktvorrichtung ausgebildet ist, um ein Paket-Routing für den drahtlosen LAN-Klienten unter Verwendung der virtuellen IP-Adresse durchzuführen und basierend auf der virtuellen IP-Adresse festzustellen, zu welchem Domainnamen eine Verbindung herzustellen ist.

2. Drahtlose LAN-Zugriffspunktvorrichtung nach Anspruch 1, wobei
die drahtlose LAN-Zugriffspunktvorrichtung ausgebildet ist, um eine globale IP-Adresse entsprechend dem Domainnamen zu erhalten, der der virtuellen IP zugeordnet ist, wodurch einer Anzahl von drahtlosen LAN-Klienten eine Umgebung geschaffen wird, in der die drahtlosen LAN-Klienten gleichzeitig mit einer identischen globalen IP-Adresse verbunden sind.

3. Drahtlose LAN-Zugriffspunktvorrichtung nach Anspruch 1 oder 2, wobei
die drahtlose LAN-Zugriffspunktvorrichtung (2) ausgebildet ist, um eine Änderung in Parametern eines Transportschichtprotokolls vorzunehmen oder das Transportschichtprotokoll entsprechend einem Kommunikationssystem des vorgegebenen Servers umzuwandeln.

4. Drahtlose LAN-Zugriffspunktvorrichtung nach einem der Ansprüche 1 bis 3, wobei
das Transportschichtprotokoll, das für eine Kommunikation mit dem vorgegebenen Server verwendet wird, ein W-TCP (drahtloses profiliertes Übertragungssteuerprotokoll) ist.

5. Drahtlose LAN-Zugriffspunktvorrichtung nach einem der Ansprüche 1 bis 4, wobei die drahtlose LAN-Zugriffspunktvorrichtung ferner aufweist:
eine Positionsinformationen-Erlangungseinheit, die ausgebildet ist, um Positionsinformationen hinsichtlich der drahtlosen LAN-Zugriffspunktvorrichtung zu erlangen, und
wobei die drahtlose LAN-Zugriffspunktvorrichtung ausgebildet ist, um die Positionsinformationen, die durch die Positionsinformationen-Erlangungseinheit erlangt wurden, an den vorgegebenen Server oder den oder die drahtlosen LAN-Klienten zu liefern, der der drahtlosen LAN-Zugriffspunktvorrichtung untergeordnet ist.

6. Mobil-Kommunikationsanschluss, wobei
der Mobil-Kommunikationsanschluss eine Funktion einer drahtlosen LAN(Lokalbereichsnetzwerk)-Zugriffspunktvorrichtung nach einem der Ansprüche 1 bis 5 umfasst.

7. Kommunikationsverfahren mit den Schritten:
jeweiliges Erstellen von separaten Kommunikationsverbindungen mit einer Seite eines oder mehrerer drahtloser LAN-Klienten, der dem Mobil-Kommunikationsanschluss untergeordnet ist, und mit einer Seite eines vorgegebenen Servers, wenn der Mobil-Kommunikationsanschluss von dem oder den drahtlosen LAN-Klienten eine Anforderung zur Verbindung zu dem vorgegebenen Server erhält, wobei der Mobil-Kommunikationsanschluss eine drahtlose LAN(Lokalbereichsnetzwerk)-Zugriffspunktfunktion umfasst, um als ein drahtloser LAN Zugriffspunkt zu arbeiten, und
Durchführen von Übertragungs-/Empfangssteuerung hinsichtlich von Daten, die an den oder die drahtlosen LAN-Klienten und den vorgegebenen Server zu übertragen und davon zu empfangen sind, Auswählen aus einer Anzahl von vorgegebenen virtuellen IP-Adressen einer virtuellen IP-Adresse für einen Domainnamen, der von dem drahtlosen LAN-Klienten angefordert wurde, Speichern der ausgewählten virtuellen IP-Adresse in Zuordnung mit dem Domainnamen und Ausgeben der ausgewählten Adresse an den drahtlosen LAN-Klienten, Durchführen von Paket-Routing für den drahtlosen LAN-Klienten unter Verwendung der virtuellen IP-Adresse und Bestimmen, basierend auf der virtuellen IP-Adresse, zu welchem Domainnamen eine Verbindung herzustellen ist.

8. Programm für einen Computer, der an einem Mobil-Kommunikationsanschluss montiert ist, der eine drahtlose LAN (Lokalbereichsnetzwerk)-Zugriffspunktfunktion umfasst, um als ein drahtloser LAN-Zugriffspunkt zu arbeiten, wobei das Programm den Computer dazu veranlasst, die Verfahrensschritte des Verfahrens nach Anspruch 7 durchzuführen.

## Revendications

1. Dispositif de point d'accès LAN sans fil, dans lequel
lorsque le dispositif de point d'accès LAN sans fil (2) est adapté pour recevoir, en provenance d'un client ou de clients LAN (réseau local) sans fil (1) subordonné(s) au dispositif de point d'accès LAN sans fil, une demande de connexion à un serveur prédéterminé (5), le dispositif de point d'accès LAN sans fil (2) est adapté pour respectivement établir des connexions de communication séparées avec un côté du client ou des clients LAN sans fil (1) et avec un côté du serveur prédéterminé (5), et pour réaliser une commande de transmission/réception sur des données à transmettre vers et reçues en provenance du client ou des clients LAN sans fil et du serveur prédéterminé, **caractérisé en ce que** le dispositif de point d'accès LAN sans fil comprend :
une unité DNS (serveur de nom de domaine) privée qui est adaptée pour sélectionner, parmi plusieurs adresses IP virtuelles préétablies, une adresse IP (protocole Internet) virtuelle pour un nom de domaine demandé par le client LAN sans fil ; pour stocker l'adresse sélectionnée en association avec le nom de domaine et pour fournir l'adresse sélectionnée au client LAN sans fil,
le dispositif de point d'accès LAN sans fil est adapté pour réaliser un acheminement par paquets pour le client LAN sans fil, à l'aide de l'adresse IP virtuelle, et pour déterminer d'après l'adresse IP virtuelle à quel nom de domaine une connexion doit être établie.

2. Dispositif de point d'accès LAN sans fil selon la revendication 1, dans lequel
le dispositif de point d'accès LAN sans fil est adapté pour obtenir une adresse IP globale correspondant au nom de domaine associé à l'adresse IP virtuelle, fournissant ainsi à une pluralité de clients LAN sans fil un environnement dans lequel les clients LAN sans fil sont connectés simultanément à une adresse IP globale identique.

3. Dispositif de point d'accès LAN sans fil selon la revendication 1 ou 2, dans lequel
le dispositif de point d'accès LAN sans fil (2) est adapté pour réaliser un changement de paramètres d'un protocole de couche de transport ou convertit le protocole de couche de transport, en fonction d'un système de communication du serveur prédéterminé.

4. Dispositif de point d'accès LAN sans fil selon l'une quelconque des revendications 1 à 3, dans lequel
le protocole de couche de transport utilisé pour communiquer avec le serveur prédéterminé est le protocole W-TCP (protocole de commande de transmission à profil sans fil).

5. Dispositif de point d'accès LAN sans fil selon l'une quelconque des revendications 1 à 4, dans lequel le dispositif de point d'accès LAN sans fil comprend en outre :
une unité d'acquisition d'information de position qui est adaptée pour acquérir une information de position sur le dispositif de point d'accès LAN sans fil ; et
le dispositif de point d'accès LAN sans fil est adapté pour fournir l'information de position acquise par l'unité d'acquisition d'information de position au serveur prédéterminé ou au(x) client(s) LAN sans fil subordonné (s) au dispositif de point d'accès LAN sans fil.

6. Terminal de communication mobile, dans lequel le terminal de communication mobile comporte une fonction d'un dispositif de point d'accès LAN (réseau local) sans fil selon l'une des revendications 1 à 5.

7. Procédé de communication comprenant les étapes suivantes :
respectivement établir des connexions de communication séparées avec un côté d'un client ou de clients LAN sans fil subordonné(s) au terminal de communication mobile et avec un côté d'un serveur prédéterminé, lorsque le terminal de communication mobile reçoit en provenance du client ou des clients LAN sans fil une demande de connexion au serveur prédéterminé, le terminal de communication mobile comportant une fonction de point d'accès LAN (réseau local) sans fil pour fonctionner en tant que point d'accès LAN sans fil ; et
réaliser une commande de transmission/réception sur des données à transmettre vers et reçues en provenance du client ou des clients LAN sans fil et du serveur prédéterminé en sélectionnant parmi une pluralité d'adresses IP virtuelles préétablies une adresse IP virtuelle pour un nom de domaine demandé par le client LAN sans fil, stockant l'adresse IP virtuelle sélectionnée en association avec le nom de domaine et en fournissant l'adresse sélectionnée au client LAN sans fil, en réalisant un acheminement par paquets pour le client LAN sans fil à l'aide de l'adresse IP virtuelle, et en déterminant d'après l'adresse IP virtuelle à quel nom de domaine une connexion doit être établie.

8. Programme pour un ordinateur installé sur un terminal de communication mobile qui comporte une fonction de point d'accès LAN (réseau local) sans fil pour fonctionner en tant que point d'accès LAN sans fil, le programme amenant l'ordinateur à exécuter les étapes de processus du procédé de la revendication 7.
